(19) Europäisches Patentamt
European Patent Office
Office européen des brevets

(11) **EP 2 543 852 B1**

(12) **EUROPEAN PATENT SPECIFICATION**

(45) Date of publication and mention
of the grant of the patent:
**21.10.2015 Bulletin 2015/43**

(51) Int Cl.:
***F02C 7/32*** *(2006.01)*

(21) Application number: **12175299.2**

(22) Date of filing: **06.07.2012**

(54) **Method for assessing the performance of auxiliary power unit**

Verfahren zur Bemessung der Leistung eines Hilfsgenerators

Procédé d'évaluation de la performance d'une unité d'alimentation auxiliaire

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.07.2011 CN 201110188951**

(43) Date of publication of application:
**09.01.2013 Bulletin 2013/02**

(73) Proprietor: **Air China Limited
Beijing (CN)**

(72) Inventors:
 • **Gu, Zhuping
  Hangzhou
  Zhejiang 311207 (CN)**
 • **Wang, Bingzheng
  Hangzhou
  Zhejiang 311207 (CN)**
 • **Zheng, Fengliang
  Hangzhou
  Zhejiang 311207 (CN)**
 • **Ma, Hongtao
  Hangzhou
  Zhejiang 311207 (CN)**
 • **Huang, Lei
  Hangzhou
  Zhejiang 311207 (CN)**
 • **Mao, Haoquan
  Hangzhou
  Zhejiang 311207 (CN)**

(74) Representative: **Grünecker Patent- und
Rechtsanwälte
PartG mbB
Leopoldstraße 4
80802 München (DE)**

(56) References cited:
**EP-A2- 1 204 076         US-A- 4 215 412
US-A1- 2005 261 820**

**Description**

TECHNICAL FIELD OF THE INVENTION

The present application relates to a method for detecting the equipment's operation condition of an aircraft, in particular to a method for detecting the performance of an airborne auxiliary power unit.

BACKGROUND

APU (Airborne Auxiliary Power Unit) is a small turbine engine mounted at the tail of an aircraft. The main function of the APU is to provide power and gas source, and a few APUs may provide additive thrust to the aircraft. In particular, the APU supplies power to start a main engine before the aircraft takes off from ground without need to rely on a ground power, gas source vehicle to start the aircraft. When on the ground, APU also supplies power and compressed air to ensure the lighting and air-conditioning in the cockpit and cabin. When the aircraft takes off, the APU can be used as a backup power. After landing, APU still supplies power to the lighting and air-conditioning.

The functions of APU determine the operation stability thereof directly relates to flight cost and quality of service of the aircraft. Moreover, in the absence of guarantees of the ground power and gas source, once there is some malfunction of the APU, the result is that the aircraft cannot fly. At present, the troubleshooting and maintenance of the APU always are post-processing. However, among the equipments of aircraft, the maintenance cost of APU is higher. In addition, the price of parts of APU is higher, the cost for storing the spare parts is higher, and the repair cycle reaches up to 4-5 months. The stable operation of the APU cannot be guaranteed due to the post-processing maintenance. Moreover, the repair cycle is time-consuming, which directly causes the aircraft delays even to be grounded.

US 2005/261820 A1 discloses a method for monitoring the performance of an aircraft mounted gas turbine engine. A counter value can be incremented or decremented in dependence on a comparison result between a sensed engine condition and a threshold condition. If the counter value exceeds a predetermined maximum counter value, a warning flag indicative of an impending maintenance condition is set.

US 4,215,412 A discloses a gas turbine engine monitoring system. The current value of a set of engine performance parameters is determined. Those values are then compared with model predicted values to supply deviation signals to a monitoring logic unit which provides an indication of faults.

Also, EP 1 204 076 A2 discloses a model based method for monitoring gas turbine engine operation.

SUMMARY

Regarding one or more technical problems in the conventional technology, in one aspect of the present application, there provides a method for detecting performance of an APU in accordance with claim 1.

BRIEF DESCRIPTION OF THE DRAWINGS

Hereinafter, some preferred embodiments of the application will be described in reference to the accompanying drawings.

Fig. 1 is a schematic illustrating a structure of the APU according to one embodiment of the present application.
Fig. 2 is a schematic illustrating a structure of an inlet guide vane assembly according to one embodiment of the present application.
Fig. 3 is a schematic illustrating a control structure of an inlet guide vane according to one embodiment of the present application.
Fig. 4 is a schematic illustrating a curve of the change of the performance of the APU according to one embodiment of the present application.
Fig. 5 is an example of A 13 message of Airbus;
Fig. 6 is a flow chart illustrating a method for detecting the performance of the APU according to one embodiment of the present application.
Fig. 7 is a flow chart illustrating a method for detecting the performance of the APU according to another one embodiment of the present application.
Fig. 8 is a flow chart illustrating a method for detecting the performance of the APU according to further one embodiment of the present application.

BRIEF DESCRIPTION OF THE DRAWINGS

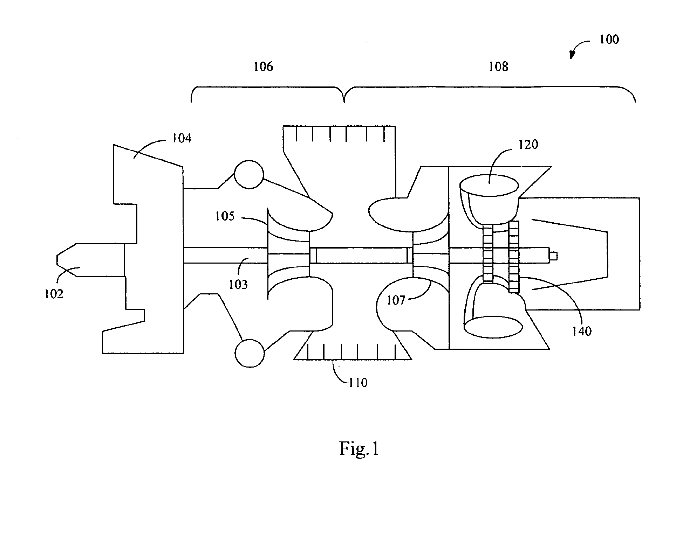

Fig. 1 is a schematic illustrating a structure of the APU according to one embodiment of the present application. As shown, APU 100 includes a generator 102, a gearbox 104, a compressor portion 106 and a hot segment portion 108. The compressor portion 106 includes a front end axial flow centrifugal compressor 105 for generating high pressure air and outwardly providing bleed air. The hot segment portion 108 includes a rear end axial flow centrifugal compressor 107. The rear end axial flow centrifugal compressor 107 is used for providing high pressure air to a combustion chamber 120 of the hot segment portion 108 to be combusted in the combustion chamber 120. A fuel oil system (not shown) of the APU provides the fuel oil to the combustion chamber 120. The fuel oil is combusted in the combustion chamber 120 to generate high temperature and high pressure gas which is applied to a turbine 140 of the hot segment portion 108 so as to make the turbine 140 turn. The turbine 140 drives the front end axial flow centrifugal compressor 105 by a shaft 103 to generate high pressure air, and simultaneously drives the generator 102 through the transmission of the gearbox 104. The generator 102 generates power and supplies power outward.

Generally, APU is an axial flow centrifugal engine, such as GTCP131-9A, APS3200 model etc. The most significant difference between the APU and the engine of aircraft is the rotors of APU are constant-speed and the rotors of the engine of aircraft are variable-speed. Therefore, APU consistently operates at a constant rotation speed and provides compressed gas to the front end axial flow centrifugal compressor 105 to supply to the load at rear part. APU has a bleed air control valve for controlling high pressure gas to be directed to a bleed air load or to a exhaust pipe to be discharged. Therefore, the pressure of bleed air can reflect performance of the front end compressor indirectly.

The greater the need for the power of the bleed air load is, the greater the resistance when the front end axial flow centrifugal compressor 105 rotates is. For keeping constant rotation speed, the hot segment portion 108 should provide higher torque. The fuel oil control system of the APU should supply more fuel oil to be combusted in the combustion chamber 120 so as to supply more heat energy to the turbine 140 for driving the front end portion to rotate at constant speed. APU also includes a temperature sensor for detecting the EGT (Exhaust Gas Temperature) of the gas exhausted from the APU, and an IGV (Inlet Guide Vane) assembly.

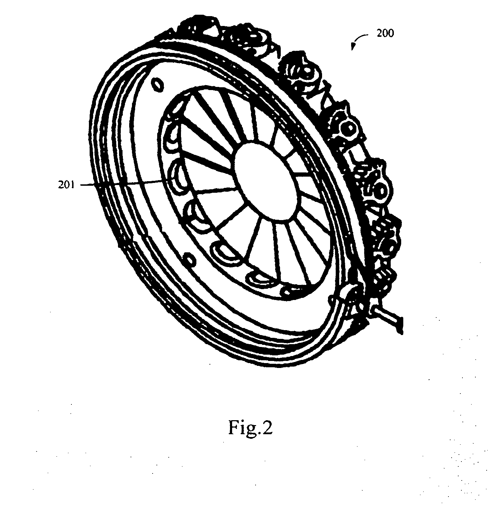

Fig. 2 is a schematic illustrating a structure of an inlet guide vane assembly according to one embodiment of the present application. As shown, the IGV assembly 200 essentially has a shape of a circular disc. A plurality of IGVs are provided on a side close to the bottom of the circular disc. A plurality of IGVs can open at different angles under control. The angle of the IGV is from 15° to 115°. The IGV does not fully close, and the vane is set in the position of 15° to cool the front end axial flow centrifugal compressor 105.

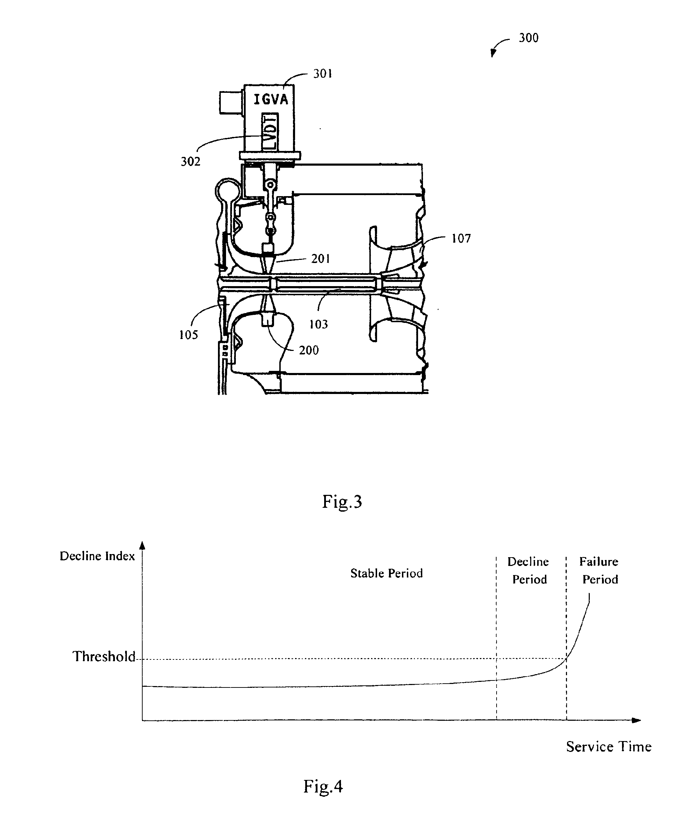

Fig. 3 is a schematic illustrating a control structure of an inlet guide vane according to one embodiment of the present application. As shown, an inlet guide vane control structure 300 includes an IGVA (Inlet Guide Vane Actuator) 301 and a LVDT (Line Variable Differential Transformer) 302 connecting to the IGVA 301. The IGV assembly 200 is installed on an inlet channel of the front end axial flow centrifugal compressor 105. LVDT is connected to the IGV of the IGV assembly 200. The IGVA controls the IGV to open at a suitable angle through the LVDT according to requirements to compressed air by the aircraft.

The EGT temperature sensor of APU detects the EGT of the APU. Because of the limit of material for manufacturing the APU, the EGT has a limit, i.e., a redline value $EGT_{RedLine}$. To avoid burnout of the APU, the APU control system generally keeps the actual EGT under the redline value $EGT_{RedLine}$. Therefore, when temperature is close to the redline value $EGT_{RedLine}$, the fuel oil system of the APU will reduce the supply of fuel oil to lower EGT. Meanwhile, the original heavy load is driven, which will reduce the rotation speed due to reduction of fuel oil supply. However, since the APU must keep constant rotation speed, the APU adjusts the IGV's angle through the IGVA to turn down the inlet and thus reduce the amount of gas transmitted to the front end compressor to reduce the burden of the front end compressor, in order to reduce the load of the front end compressor. Therefore, both of the pressure and flow rate of bleed gas outputted from the front end compressor are reduced.

Fig. 4 is a schematic illustrating a curve of the performance of the APU according to one embodiment of the present application. As service time increases, performance of all of APU gradually deteriorates, i.e., the decline indexes gradually increases. When the decline indexes of the APU is relatively steady, the performance of the APU is in a stable period; when performance degradation of the APU gradually accelerates, the performance of the APU enters a decline period; when a certain threshold value is exceeded, the performance of the APU enters a failure period, and failure may occur at any time. When the APU enters the failure period, the use of the APU is influenced, the quality of service and safety of flight also suffer bad influence, and an unscheduled maintenance may be generated easily which can cause delay and grounding of the aircraft. There is no means in conventional technology to detect whether the performance of the APU is in the decline period. However, some embodiments of the present application can perform such detection.

Detecting the decline period has the following advantages. Firstly, when the APU is in the decline period, the probability of failure is still low. Therefore, safety of flight and the quality of service will be guaranteed if the aircraft is maintained at this time. Secondly, when it is determined the APU enters decline period, the airline can timely arrange maintenance for the aircraft, so as to avoid unscheduled maintenance, and reduce the delay of the aircraft and the waste of cost of maintenance caused by maintaining according to the fixed schedule. Certainly, embodiments of the present invention also can be applied to detect the failure period.

For detecting the performance of the APU, it is required to monitor operation state of the APU onboard and obtain relevant operation data of the APU. As the aircraft system is more and more complex, the aircraft data system is more and more powerful, such as ACMS (Aircraft Condition Monitoring System) of Airbus and AHM (Aircraft Heath Monitor) of Boeing. A feature of such systems is that it can monitor the operation data of the aircraft in real time, and automatically generate messages including special data when a certain trigger condition is met.

Taking the ACMS of Airbus as an example (the AHM of Boeing can be comparable with the ACMS of Airbus), the ACMS includes an aircraft integrated data system (AIDS). The core of the AIDS is a data management unit (DMU). The DMU has the following two important functions:

- collecting, processing and recording many parameters in the aircraft, including data from the black box. These parameters are stored in an internal storage memory of the DMU or an external recorder, such as a digital AIDS recorder (DAR);
- generating system messages, and triggering the messages when the trigger condition is satisfied by the aircraft state or system parameters. These messages are stored a nonvolatile storage memory in the DMU.

According to one embodiment of the present application, the aircraft data system, such as ACMS or AHM, can be used to obtain the operation data of the APU.

The ACARS is comprised of an avionics computer called ACARS managing unit (MU), and a control display unit (CDU). The MU is used for sending and receiving VHF radio digital messages to and from the ground. On the ground, the ACARS is comprised of a network including the ground station having a radio transceiver, which can receive or send messages (data link messages). These ground stations generally are owned by service providers, and distribute received messages to respective servers of different airlines on the network. According to one embodiment of the present application, the APU messages are generated from obtained operation data of the APU and transmitted to the server on the ground through ACARS.

According to one embodiment of the present invention, the APU message can be transmitted by a communication device or system of the ATN (Aviation Telecommunication Network).

As to the current flight data system, monitoring the performance of the APU actually is an existing project. Therefore, corresponding APU message can be automatically generated and transmitted to the ground via ACARS or ATN. However, the monitored data is not used for detecting the decline period of the performance of the APU.

For example, the A13 message of Airbus, i.e., APU MES/IDLE REPORT, or the APU message of Boeing is an example of such APU message.

In the following embodiments, the A13 message is used as an example, and the APU message of Boeing can be processed similarly.

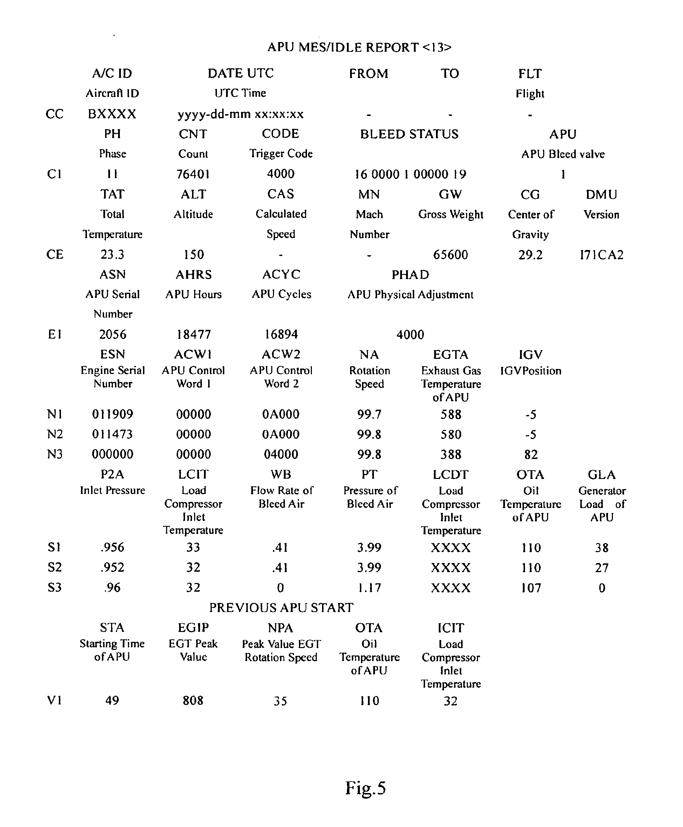

Fig. 5 is a schematic illustrating an example of A13 message of Airbus. As shown, the A 13 message mainly includes four parts of information, which respectively are a header, an APU history information, an operation parameter for starting the aircraft engine and an APU starting parameter.

The header is composed of CC section and C1 section including mainly the following information: flight information of the aircraft, leg in which the message is generated, the state of the bleed air valve, total air temperature (i.e., external temperature) and like. The APU history information is composed of EI section including the following information: the APU serial number, service hours and circulation and like. The operation parameter for starting the aircraft engine is composed of N1-S3 sections, wherein, N1 and S1 indicate the operation status when the first aircraft engine is started, N2 and S2 indicate the operation status when the second aircraft engine is started, and N3 and S3 indicate the status after the APU starts all of engines successfully and when the aircraft is running slowly.

The A 13 message includes a plurality of parameters relating to operation status of the APU. The operation parameter for starting the aircraft engine includes the EGT, the opening angle of the IGV, the inlet pressure of the compressor, the load compressor inlet temperature, the flow rate of the bleed air, the pressure of the bleed air, the oil temperature and the APU generator load. The parameter when the APU starts includes the starting time, the peak value of the EGT, the rotation speed at the peak value of EGT and the load compressor inlet temperature.

The performance of the APU may relate to other parameters, in addition to the parameters in the A 13 message. Taking the aircraft A320 of Airbus as an example, the amount of system data obtained by the aircraft can reach up to more than 13,000, wherein, a plurality of data can directly or indirectly reflect the performance of the APU. Therefore, it is one of issues to be solved by the present application that how to select suitable parameters from all of APU performance parameters and to generate a suitable algorithm corresponding to the selected parameters so as to accurately reflect the performance of the APU.

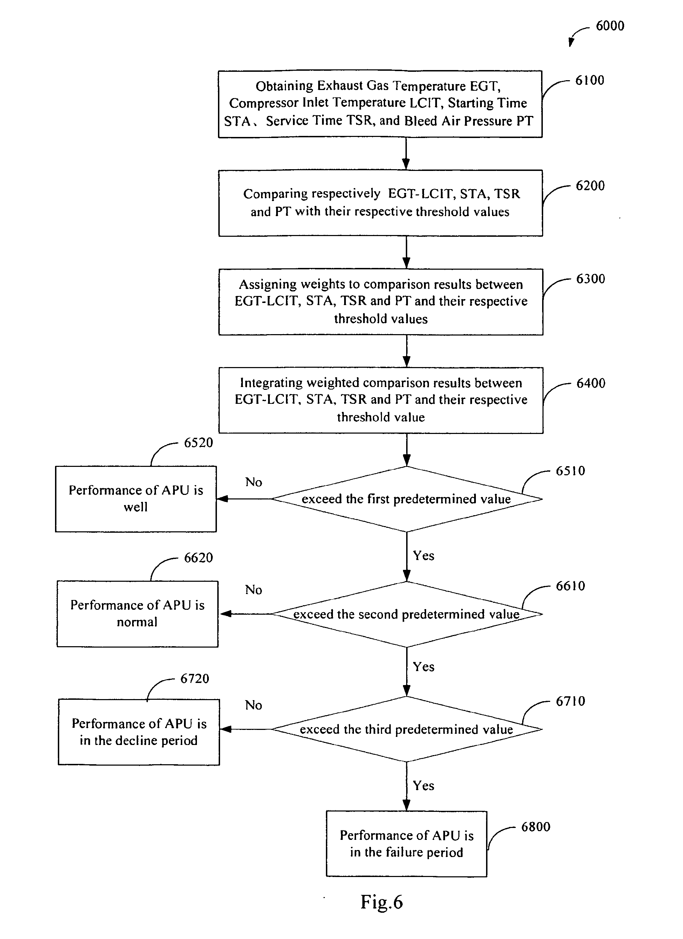

Fig. 6 is a flow chart illustrating a method for detecting the performance of the APU according to one embodiment of the present application. As shown, in the method 6000 for detecting the performance of the APU in the embodiment, at step 6100, the following operation information of the APU is obtained: EGT, LCIT (Compressor Inlet Temperature), STA (Starting Time), service time TSR and bleed air pressure PT. At step 6200, the difference between EGT and LCIT (i.e., EGT-LCIT), STA, TSR and PT are respectively compared with their respective threshold values. According to one embodiment of the present application, the respective threshold values are extreme values of respective parameters. At step 6300, each comparison result between EGT-LCIT, STA, TSR and PT and their respective threshold values is assigned with a weight. At step 6400, comparison results between EGT-LCIT, STA, TSR and PT and their respective threshold value considering the weight are integrated together. At step 6510, it is determined whether the integrated result exceeds a first predetermined value. If the integrated result does not exceed the first predetermined value, it is determined at step 6520 that the performance of the APU is good; and at step 6610, it is determined whether the integrated result exceeds a second predetermined value. If the integrated result does not exceed the second predetermined value, it is determined at step 6620 that the performance of the APU is normal, and at step 6710, it is determined whether the integrated result exceeds a third predetermined value. If the integrated result does not exceed the third predetermined value, it is determined at step 6720 that the performance of the APU is in the decline period. If the integrated result exceeds the third predetermined value, it is determined at step 6800 that the performance of the APU is in the fault period.

According to one embodiment of the present application, the information required at step 6100 can be obtained from the APU message such as the A 13 message. For example, the A13 message of the operation status of the aircraft's APU can be obtained remotely from SITA (Société Internationale de Telecommunications Aéronautiques) network control center and ADCC (Aviation Data Communication Corporation) network control center in real time, and the obtained A13 message of the operation status of the aircraft's APU can be decoded by a message decoder so as to obtain the operation information of the aircraft's APU.

If the aircraft data system does not automatically generate the operation status message of the APU, corresponding sensor and trigger condition should be added to generate the desired APU message. If the existing APU message of the aircraft data system does not cover one or more of the EGT, LCIT, STA, TSR and PT, the generating condition of the APU message should be modified to add the lacking one or more parameters. Since the APU message can be transmitted to a data server of an airline in real time via ACARS or ATN, the real time monitoring of the performance of the APU can be achieved. Certainly, the transmission way of the message can avoid high cost and human error caused by the manual way.

According to one embodiment of the present application, the information required at step 6100 can be obtained directly from the aircraft data system without generating the APU message.

At step 6200, the threshold value for the difference of EGT and LCIT (EGT-LCIT) is $EGT_{Redline}$. $EGT_{Redline}$ is an EGT redline value of the APU. $EGT_{Redline}$ depends on the model of the APU. Different models of APUs have different EGT redline values, which can be obtained from related manuals. The threshold value for STA is $STA_{WarningLine}$ which is a performance decline value of the STA and also depends on the model of the APU. The threshold value for TSR is $TSR_{rt}$, which means a corresponding time where the reliability of time-on-wing of a certain model of APU is 70%. The threshold value of PT is $PT_{Min}$, it is the minimum bleed air pressure required by a certain model of APU. Or the threshold value of PT also can be $PT_{BaseLine}$, it is the lowest inherent amount of bleed air of a certain model of APU during normal operation. Comparison between EGT-LCIT, STA, TSR, PT and their respective threshold values can reflect an offset degree between current performance and standard performance of the APU, and further reflect a decline degree of the performance of the APU. $EGT_{Redline}$, $STA_{WarningLine}$ and $PT_{Min}$ or $PT_{BaseLine}$ can be obtained from related aircraft manuals or from manufactures. Certainly, they can be obtained through actual experiment. However, there is certain bias between $TSR_{rt}$ and a standard value in general, since $TSR_{rt}$ is influenced by geography and maintenance environments and other factors. Through long period observation and analysis, the inventor finds that the time-effect model of the APU satisfies Poisson distribution. The desired $TSR_{rt}$ can be obtained from actual data through utilizing Poisson distribution so as to obtain more accurate $TSR_{rt}$. For example, the parameters (such as a mean value) of Poisson distribution followed by the actual TSR can be calculated firstly, and then the corresponding $TSR_{rt}$ where the failure rate is 30% (the security rate is 70%) can be calculated utilizing the obtained parameters of Poisson distribution actually followed by the TSR.

Comparison between EGT-LCIT, STA, TSR, PT and their respective threshold values can be done by calculating the ratio or difference. To facilitate considering weights of respective parameters, the ratios of EGT-LCIT, STA, TSR, PT and their respective threshold values are calculated at step 6200 according to one embodiment of the present application.

EGT-LCIT, STA, TSR and PT have different influence on the performance of the APU, therefore, they need to be assigned with different weights. According to one embodiment of the present application, in case that the ratios of EGT-LCIT, STA, TSR, PT and their respective threshold values are obtained, R1, R2, R3 and R4 are respectively taken as weights of EGT-LCIT, STA, TSR, PT, and R1+R2+R3+R4=1. According to observation and analysis of the inventor, the TSR has the greatest influence, and thus R3 is generally greater than 0.25; EGT-LCIT and STA may have different effects regarding different models of APU; PT has relative small effects, and R4 is the lowest. According to one embodiment of the present application, as to APS3200 APU, R3=0.35, R2=0.3, R1=0.2, and R4=0.15. As to GTCP131-9AAPU, R3=0.35, R1=0.3, R2=0.2, and R4=0.15.

According to one embodiment of the present application, the performance of the APU can be estimated by the following formula:

$$PDI = R1\frac{EGT - LCIT}{EGT_{RedLine}} + R2\frac{STA}{STA_{WarningLine}} + R3\frac{TSR}{TSR_{rt}} + R4\frac{PT_{Min}}{PT} \qquad (1)$$

wherein, PDI (Performance Detection Index) is a parameter reflecting the performance of the APU. According to observation and analysis of the inventor, if PDI is less than 0.7, it means the performance of the APU is well; if the PDI is greater than 0.7 but less than 0.85, it means the performance of the APU is normal; and if the PDI is greater than 0.85, it means the performance of the APU is poor and in the decline period. If PDI is close to 1, for example PDI is greater than 0.95, it means the APU is in the failure period and failures may occur at any time. Therefore, an example of the first predetermined value at step 6510 is 0.7, an example of the second predetermined value at step 6610 is 0.85, and an example of the third predetermined value at step 6710 is 0.95.

The method in the above embodiment of the present application is further discussed through two examples hereinafter.

Example 1: the related information of the APS3200 APU is as follows: $EGT_{Redline}$ =682, $STA_{WarningLine}$=90, $PT_{Min}$=3, $TSR_{rt}$=5000. The weight parameters respectively are R1=0.2, R2=0.3, R3=0.35, R4=0.15.

The APU message of the aircraft is obtained remotely from SITA network control center or ADCC network control center in real time, and the obtained APU message of the aircraft is decoded by an ACARS message decoder so as to obtain the operation information of the aircraft APU including: EGT:629, LCIT:33, STA:59, TSR:4883 and PT:3.66. According to the following formula:

$$PDI = R1\frac{EGT - LCIT}{EGT_{RedLine}} + R2\frac{STA}{STA_{WarningLine}} + R3\frac{TSR}{TSR_{rt}} + R4\frac{PT_{Min}}{PT}$$

it is calculated that PDI=0.85. Therefore, it is determined that the performance of the APU is in the decline period, and maintenance of the APU of the aircraft should be planned.

Example 2: the related information of the GTCP131-9A APU is as follows: $EGT_{Redline}$=642, $STA_{WarningLine}$=60, $PT_{Min}$=3.5, $TSR_{rt}$=5000. The weight parameters respectively are R1=0.3, R2=0.2, R3=0.35, R4=0.15.

The APU message of the aircraft is obtained remotely from SITA network control center or ADCC network control center in real time, and the obtained APU message of the aircraft is decoded by an ACARS message decoder so as to obtain the operation information of the aircraft APU including: EGT=544, LCIT=31, STA=48, TSR=2642 and PT=3.76. According to the following formula:

$$PDI = R1\frac{EGT - LCIT}{EGT_{RedLine}} + R2\frac{STA}{STA_{WarningLine}} + R3\frac{TSR}{TSR_{rt}} + R4\frac{PT_{Min}}{PT}$$

it is calculated that PDI=0.72. Therefore, it is determined that the performance of the APU is normal, and the APU can be used normally.

Compared with the prior art, in the method of the above embodiment of the present application, EGT, LCIT, STA, TSR and PT are obtained in real time, the PDI is obtained according to the formula (1), and then the obtained PDI is compared with the predetermined value, therefore, the method can accurately determine the performance of the APU based on the comparison between the PDI and the predetermined value. In addition, the ACARS message of operation status of the aircraft APU is obtained remotely in real time, which can reduce working load and enhance the work efficiency, compared with obtaining manually.

The altitude and temperature can influence measuring results of the EGT and PT. According to one embodiment of the present application, the measured EGT and PT is converted into values under the standard condition and thus to remove the effect of altitude and temperature, so as to more accurately detect the performance of the APU. For example, the altitude of 0 meter and the temperature of 50°C can be selected as the standard condition, and other altitude and temperature also can be e selected as the standard condition.

According to one embodiment of the present application, under the standard condition having the altitude of 0 meter and the temperature of 50°C, the corrected formula of the PT is as follows:

$$PT = PT_{std} \times e^{\frac{\frac{ALT \times 0.3048}{1000}}{\frac{R(TAT+273.15)}{mg}}} \qquad (2)$$

wherein, $PT_{std}$ is the pressure under the altitude of 0 meter, ALT is the altitude or the standard altitude, TAT is the ambient temperature or total temperature, m is the air quality and can be 29, g is $10m/s^2$, R is the adjustment parameter and can be 8.51.

Therefore, the correction coefficient $\delta$ of the altitude pressure is:

$$\delta = e^{\frac{\frac{ALT \times 0.3048}{1000}}{\frac{R(TAT+273.15)}{mg}}}$$

Considering the effect of the temperature, the final correction formula of the PT is as follows:

$$PT_{cor} = \frac{PT}{\delta} + \Delta PT \qquad (3)$$

wherein, $PT_{cor}$ is the corrected bleed air pressure, $\Delta PT$ is a function related to the temperature and can be calculated by the following formula:

$$\Delta PT = a1TAT^2 + b1TAT + c1 \qquad (4)$$

wherein, TAT is the ambient temperature, a1, b1 and c1 are adjustment coefficient and can be measured through experiments. According to one embodiment of the present application, a1 has an order of $10^{-5}$, b1 has an order of $10^{-2}$, and c1 is between 0 and -1.

When a1, b1 and c1 are obtained through experiments, the measured PT can be converted into the corrected $PT_{cor}$ under the standard status according to formula (3).

The correction formula of EGT is as follows:

$$EGT_{cor} = EGT + \Delta EGT + p1\frac{PT}{\delta} + p2(PT_{cor} - PT_{Req}) \qquad (5)$$

Wherein, $EGT_{cor}$ is the EGT under the standard condition, $\Delta EGT$ is the function related to the temperature, $PT_{Req}$ is the lowest bleed air pressure required when the engine is started, p1 and p2 are the adjustment coefficient. According to one embodiment of the present application, the range of values of the p1 is 20-60, the range of value of the p2 is 70-100. The specific values of p1 and p2 can be obtained through experiments. For example, different EGTs can be obtained under different altitudes, maintaining a certain power output and temperature of 50°C. Then, the measured EFTs are compared with the EGT under the temperature of 50°C and under sea level pressure, and the changes of the EGT and the temperature are regressed, so that the adjustment coefficient in the correction formula can be obtained.

$\Delta EGT$ can be calculated from the following formula:

$$\Delta EGTA = a2TAT^2 + b2TAT + c2 \qquad (6)$$

wherein, TAT is the ambient temperature, a2, b2 and c2 are adjustment coefficients and can be measured through experiments. According to one embodiment of the present application, the range of a2 is 0.005-0.02, the range of b2 is 0.5-2.5 and the range of c2 is 60-100.

When adopting the corrected EGT and PT, the formula (1) can be rewritten as the following:

$$PDI = R1\frac{EGT_{cor}}{EGT_{\text{Red}Line}} + R2\frac{STA}{STA_{WarningLine}} + R3\frac{TSR}{TSR_{rt}} + R4\frac{PT_{req}}{PT_{cor}} \qquad (7)$$

According to one embodiment of the present application, as to the corrected PDT, if the corrected PDI is less than 0.7, it means the performance of the APU is well; if the corrected PDI is greater than 0.7 but less than 0.8, it means the performance of the APU is normal; if the corrected PDI is greater than 0.8, it means the performance of APU is poor and is in the decline period. And if PDI is greater than 0.85, it indicates that APU is in the failure period. Therefore, an example of the first predetermined value at step 6510 is 0.7, an example of the second predetermined value at step 6610 is 0.8, and an example of the third predetermined value at step 6710 is 0.85.

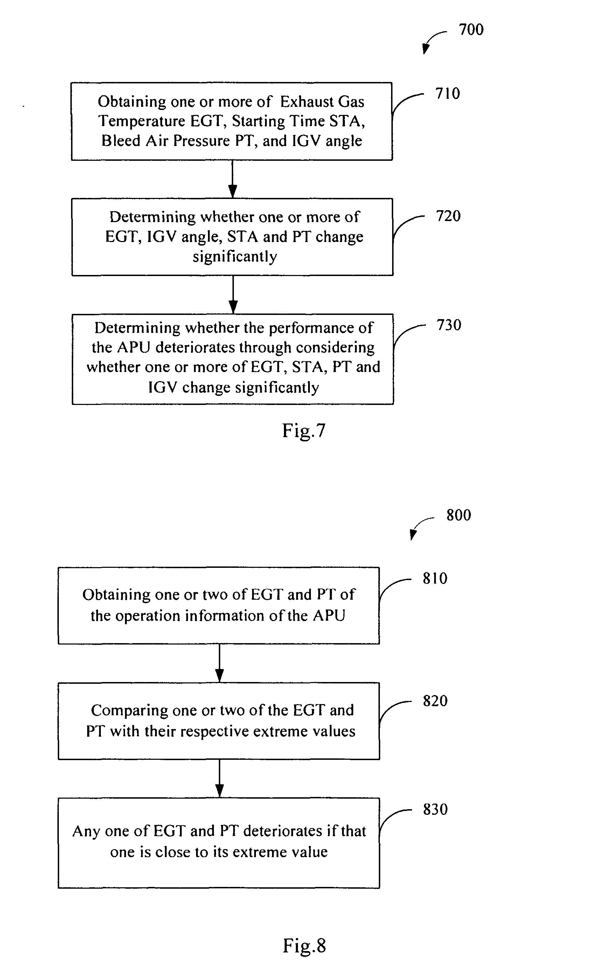

Fig. 7 is a flow chart illustrating a method for detecting the performance of the APU according to another one embodiment of the present application. As shown, in the method 700 for detecting the performance of the APU in the embodiment, at step 710, one or more of the following operation information of the APU are obtained: EGT, STA, PT and the IGV angle. The method for obtaining operation information of the APU shown in fig. 6 can be applied in this embodiment.

According to the operation principle of the APU, the EGT (APU Exhaust Gas Temperature) is an important parameter reflecting the performance of the APU. Since the EGT directly reflect the heat energy conversion efficiency of the whole APU when the APU operates at constant rotation speed. The lower the heat energy conversion efficiency of the APU is, the higher the value of the EGT is. Since the control system of the APU can control the fuel oil valve and the inlet angle of the IGV to ensure overheat will not occur, the PT and the angle of the IGV in the APU parameters can reflect change indicating the APU is close to overheat status and need to be prevented from overheating. The STA is a parameter reflecting the overall performance of the APU, which includes the performance of the starting motor, the performance of the gearbox, the efficiency of the compressor unit and power unit (i.e., one compressor and two stages of turbines). The current performance and changing trend of the APU can be reflected through monitoring the four key parameters EGT, IGV, STA and PT. Moreover, respectively monitoring the parameters also contributes to determine the failure sources and find hidden failures.

At step 720, it is determined whether one or more of EGT, IGV angle, STA and PT change significantly. It is determined that corresponding parameter deteriorates when one or more of EGT, IGV angle, STA and PT change significantly.

As to the EGT and PT, $EGT_{cor}$ and $PT_{cor}$ mentioned in the above embodiment can replace the directly measured EGT and PT to remove the influence of the altitude and temperature so as to obtain more accurate results.

As the service time passes, the performance of the APU gradually deteriorates. This characteristic of performance parameters of the APU can be reflected by the following formula:

$$X = \beta 0 + \beta 1 t_0 \qquad (8)$$

wherein, X is any one of the EGT, STA, PT and IGV angle, $t_0$ is the installation time, $\beta 0$ and $\beta 1$ are fitting parameters. $\beta 1$ is the slope reflecting the changing trend of parameters.

According to one embodiment of the present application, a plurality of values of one parameter of EGT, STA, PT and IGV obtained in a certain period are fitted so as to obtain $\beta 1$. $\beta 1$ is compared with the reference slope, and it is determined that said parameter of EGT, STA, PT and IGV changes significantly if there is significant difference between $\beta 1$ and the reference slope. The reference slope is calculated utilizing data of the APU having good operation condition. The data can be the data after initial installation of the same APU and also can be the data of other APU of the same model working well.

According to one embodiment of the present application, after the APU is installed and parameters thereof is initialized, a plurality of initial parameters recorded are averaged and thus respective initial value of every parameter is obtained as their respective reference values. The amount of recorded parameter is 10 or more.

Variations can be obtained through comparison between the subsequent parameters and the reference value. These variations conform to the formula (8). Their slopes also can reflect the changing trend of parameters of the APU. Therefore, in this embodiment, comparing the slope of the variation of one of EGT, STA, PT and IGV relative to its corresponding reference value with the slope of the reference variation, it is determined that said one parameter among EGT, STA, PT and IGV changes significantly, i.e., said parameter deteriorates, if there is significant difference between two slopes.

According to one embodiment of the present application, the values of one parameter of EGT, STA, PT and IGV in two consecutive periods of the same length are compared as independent samples. It is determined that said one parameter changes significantly and deteriorates if the above comparison shows significant difference.

For reducing influence of fluctuation, perform smooth processing to the values of parameters of measured EGT, STA, PT and IGV. According to one embodiment of the present application, perform smooth processing to the values of parameters through adopting multipoint smooth average rolling mean. The amount of multipoint is more than 3. According to one embodiment of the present application, the values of parameters are performed smooth processing according to the following formula:

$$X_{new} = C1X_{smooth} + C2X_{old} \qquad (9)$$

wherein, $X_{old}$ is the value before smooth processing, i.e., the measured value, $X_{new}$ is the value after smooth processing, $X_{smooth}$ is the smooth value which can be the value of an adjacent point (such as the previous point) being smooth-processed and also can be the average value of points around the current point (not the current point), C1 and C2 are the weight values and C1 is greater than C2, for example, C1=0.8, C2=0.2.

At step 730, it is determined whether the performance of the APU deteriorates through considering whether one or more of EGT, STA, PT and IGV change significantly.

According to one embodiment of the present application, it is determined that the performance of the APU deteriorates and the APU is in the decline period if any one of EGT, STA, PT and IGV deteriorates. According to another embodiment of the present application, it is determined that the performance of the APU deteriorates and the APU is in the decline period if STA deteriorates. According to another embodiment of the present application, it is determined that the performance of the APU deteriorates and the APU is in the decline period if any two of EGT, STA, PT and IGV deteriorate. According to another embodiment of the present application, it is determined that the performance of the APU deteriorates and the APU is in the decline period if both of EGT and PT deteriorate.

The method shown in figs. 6 and 7 can be used simultaneously to more accurately detect the performance of the APU.

Fig. 8 is a flow chart illustrating a method for detecting the performance of the APU according to further one embodiment of the present application. As shown, in the method 800 for detecting the performance of the APU in the embodiment, at step 810, one or two of EGT and PT of the operation information of the APU are obtained. The method for obtaining performance information of the APU mentioned above can be applied in this embodiment.

At step 820, the EGT and PT are compared with their respective limits. In particular, the EGT may be compared with the $EGT_{RedLine}$, the PT is compared with the $PT_{Req}$ which is the lowest bleed air pressure required when the engine starts.

At step 830, it is determined that any one of EGT and PT deteriorates if that one is close to its limit. According to one embodiment of the present application, it is determined that the performance of the APU is in decline period if any one of EGT and PT deteriorates. According to one embodiment of the present application, it is determined that the performance of the APU is in decline period if both of EGT and PT deteriorate.

According to one embodiment of the present application, as to the EGT, the formula is as the following:

$$EGT_{Tolerance} = EGT_{RedLine} - EGT_{cor} \qquad (10)$$

wherein, $EGT_{Tolerance}$ is the margin of the EGT, i.e., the difference between the EGT and the $EGT_{RedLine}$. Since the control system of the APU can prevent the EGT from overheating, it means that the APU cannot obtain more power by increasing fuel oil supply when the control system beginning to work. The power of the APU gradually decreases as service time passes, which means the APU is in the decline period. Therefore, it means the APU is in the decline period when the $EGT_{Tolerance}$ is close to 0.

PT is an important parameter when the APU is in the decline period.

According to one embodiment of the present application, as to the PT, the formula is as the following:

$$PT_{Tolerance} = PT_{cor} - PT_{Req} \qquad (11)$$

wherein, $PT_{Tolerance}$ is the margin of the PT, i.e., the difference between the PT and the lowest bleed air pressure required when the engine starts. The magnitude of the $PT_{Tolerance}$ reflects operation status of the APU in the decline period. When $PT_{Tolerance}$ is close to 0, the APU should be replaced.

Example 3: it is can be calculated from data of EGT, TAT (External Temperature), ALT (Altitude) and PT obtained from the messages that $EGT_{cor}$= 654.49, $PT_{cor}$ = 3.27. According to the search, the lowest bleed air $PT_{Req}$

required when the engine of the A319 aircraft of Airbus starts is 3.2. It can be obtained according to long term experimental verification that the redline value $EGT_{RedLine}$ of APS3200 APU is 645. It can be obtained from the above evaluation formula that $EGT_{Tolerance}$= -9.49, the degree in which it is close to 0 is 9.49/645, i.e., about 1.4%; $PT_{Tolerance}$= 0.07, the degree in which it is close to 0 is 0.07/3.2, i.e., about 2.2%. On that evidence, both of the EGT and PT deteriorate and the APU is in the decline period and should be replaced.

The method shown in figs. 6-8 can be used simultaneously to more accurately detect the performance of the APU.

Compared with conventional technology, the method discussed in the embodiment can obtain EGT of the APU, LCIT, STA, TSR, PT and the angle of the IGV in real time, and thus perform detection of the performance of the APU through processing these parameters and determine whether the performance of the APU is in the decline period, which can support the maintenance of the APU for engineers and thus ensure normal operation of the APU so as to avoid delay and grounding of the aircraft. Meanwhile, targeted maintenance and operation control can be performed through evaluation of the performance of the APU, which will significantly reduce maintenance cost.

The above embodiments of the invention have been disclosed for illustrative purposes and the invention is not to be limited to the particular forms or methods disclosed. Those skilled in the art will appreciate that various modifications, additions and substitutions are possible. Therefore, the invention is to cover all modifications, equivalents and alternatives falling within the scope of the appended claims.

**Claims**

1.  A method for detecting performance of an APU (100), comprising:

    obtaining exhaust gas temperature EGT, compressor inlet temperature LCIT, starting time STA, service time TSR and bleed pressure PT;
    comparing respectively STA, TSR, PT and a difference between EGT and LCIT (i.e., EGT-LCIT) with their respective threshold values;
    assigning respectively weights to comparison results between STA, TSR, PT and EGT-LCIT and their respective threshold values; and
    determining the performance of the APU (100) based on the weighted comparison results between STA, TSR, PT and EGT-LCIT and their respective threshold values, wherein the step of determining comprises determining the performance of the APU (100) based on the following formula:

$$PDI = R1\frac{EGT_{cor}}{EGT_{RedLine}} + R2\frac{STA}{STA_{WarningLine}} + R3\frac{TSR}{TSR_{rt}} + R4\frac{PT_{Min}}{PT_{cor}},$$

    wherein PDI is a performance detection index reflecting the performance of the APU (100), R1, R2, R3 and R4 are respective weights of the EGT-LCIT, STA, TSR and PT, $EGT_{cor}$ is the EGT under standard condition, $PT_{cor}$ is the bleed air pressure under standard condition, and $PT_{Min}$ can be replaced by $PT_{Baseline}$.

2.  A method according to claim 1, wherein the threshold value of EGT-LCIT is an EGT redline value $EGT_{Redline}$ of the APU (100).

3.  A method according to claim 1, wherein the threshold value of STA is a performance decline value $STA_{WarningLine}$ of STA.

4.  A method according to claim 1, wherein the threshold value of TSR is a corresponding time $TSR_{rt}$ where the reliability of time-on-wing of the APU (100) is 70%.

5.  A method according to claim 1, wherein $TSR_{rt}$ is calculated based on actual data through Poisson distribution.

6.  A method according to claim 1, wherein the threshold value of the PT is a minimum bleed air pressure $PT_{Min}$ of the APU (100) or is a lowest inherent bleed air amount $PT_{BaseLine}$ of the APU (100) during normal operation.

7.  A method according to claim 1, wherein the step of comparing comprises:

    calculating ratios between EGT-LCIT, STA, TSR, PT and their respective threshold values.

8. A method according to claim 1, wherein the weight of the TSR is greatest and the weight of the PT is lowest.

9. A method according to claim 1, further comprising:

determining the performance of the APU (100) is well when the PDI is less than a first predetermined value;
determining the performance of the APU (100) is normal when the PDI is greater than the first predetermined value but less than a second predetermined value;
determining the performance of the APU (100) is in a decline period when the PDI is greater than the second predetermined value; and
determining the performance of the APU (100) is in a failure period when the PDI is greater than a third predetermined value.

10. A method according to claim 9, wherein the first predetermined value is 0.7, the second predetermined value is 0.8 and the third predetermined value is 0.85.

11. A method according to claim 1, wherein the $PT_{cor}$ is calculated according to the following formula:

$$PT_{cor} = \frac{PT}{\delta} + \Delta PT \, ,$$

wherein ∆APT is a function related to a temperature, δ is an altitude pressure correction factor and is calculated according to the following formula:

$$\delta = e^{\frac{\frac{ALT \times 0.3048}{1000}}{\frac{R(TAT+273.15)}{mg}}} \, ,$$

wherein ALT is an altitude or standard altitude, TAT is an ambient temperature or total temperature, m is an air quality and is 29, g=10m/s$^2$, and R is an adjustment parameter.

12. A method according to claim 11, wherein the $EGT_{cor}$ is calculated according to the following formula:

$$EGT_{cor} = EGT + \Delta EGT + p1\frac{PT}{\delta} + p2(PT_{cor} - PT_{Req}) \, ,$$

wherein ∆ EGT is a function related to a temperature, $PT_{Req}$ is a lowest bleed air pressure required when an engine starts, and p1 and p2 are correction coefficients.

13. A method according to claim 1, wherein the step of obtaining comprises:

obtaining the EGT, LCIT, STA, TSR and PT from an APU message.

14. A method according to claim 13, wherein the APU message includes an A13 message of Airbus or an APU message of Boeing.

15. A method according to claim 13, further comprising:

generating the APU message including the EGT, LCIT, STA, TSR and PT of operation information of the APU (100).

16. A method according to claim 13, further comprising:

transmitting the APU message to a server utilizing ACARS or ATN.

**Patentansprüche**

1.  Verfahren zur Erfassung einer Leistung einer Hilfsleistungseinheit, APU, (100), mit:

    Erhalten von Abgastemperatur EGT, Kompressoreinlasstemperatur LCIT, Startzeit STA, Einsatzzeitdauer TSR und Nenndruck PT;
    Vergleichen jeweils STA, TSR, PT und eine Differenz zwischen EGT und LCIT (d.h. EGT-LCIT) mit ihren entsprechenden Schwellenwerten;
    jeweils Zuordnen von Gewichtungsfaktoren zu Vergleichsergebnissen zwischen STA, TSR, PT und EGT-LCIT und ihren jeweiligen Schwellenwerten; und
    Bestimmen der Leistung der APU (100) auf der Grundlage der gewichteten Vergleichsergebnisse zwischen STA, TSR, PT und EGT-LCIT und ihren entsprechenden Schwellenwerten, wobei der Schritt des Bestimmens Bestimmung der Leistung der APU(100) auf der Grundlage der folgenden Formel umfasst:

    $$PDI = R1 \frac{EGT_{cor}}{EGT_{RedLine}} + R2 \frac{STA}{STA_{WarningLine}} + R3 \frac{TSR}{TSR_{rt}} + R4 \frac{PT_{Min}}{PT_{cor}},$$

    wobei PDI ein Leistungserfassungsindex ist, der die Leistung der APU (100) wiedergibt, R1, R2, R3 und R4 entsprechende Gewichtungsfaktoren für EGT-LCIT, STA, TSR und PT sind, $EGT_{cor}$ die EGT unter Standardbedingungen ist, $PT_{cor}$ der Nennluftdruck unter Standardbedingungen ist, und $PT_{Min}$ durch $PT_{BaseLine}$ ersetzt werden kann.

2.  Verfahren nach Anspruch 1, wobei der Schwellenwert von EGT-LCIT ein EGT-Alarmwert $EGT_{Redline}$ der APU (100) ist.

3.  Verfahren nach Anspruch 1, wobei der Schwellenwert von STA Leistungsabnahmewert $STA_{WarningLine}$ von STA ist.

4.  Verfahren nach Anspruch 1, wobei der Schwellenwert von TSR eine entsprechende Zeit TSRrt ist, bei der die Zuverlässigkeit für die Betriebszeit der APU (100) 70 % beträgt.

5.  Verfahren nach Anspruch 1, wobei TSRrt auf der Grundlage von tatsächlichen Daten mittels Poisson-Verteilung berechnet wird.

6.  Verfahren nach Anspruch 1, wobei der Schwellenwert des PT ein minimaler Nennluftdruck $PT_{Min}$ der APU (100) oder ein kleinster innerer Nennluftdruck $PT_{BaseLine}$ der APU (100) während des normalen Betriebs ist.

7.  Verfahren nach Anspruch 1, wobei der Schritt des Vergleichens umfasst:

    Berechnen von Verhältnissen zwischen EGT-LCIT, STA, TSR und PT und ihren entsprechenden Schwellenwerten.

8.  Verfahren nach Anspruch 1, wobei der Gewichtungsfaktor des TSR am größten und der Gewichtungsfaktor des PT am kleinsten ist.

9.  Verfahren nach Anspruch 1, das ferner umfasst:

    Bestimmen, dass die Leistung der APU (100) gut ist, wenn der PDI kleiner als ein erster vorbestimmter Wert ist;
    Bestimmen, dass die Leistung der APU (100) normal ist, wenn der PDI größer als der erste vorbestimmte Wert aber kleiner als ein zweiter vorbestimmter Wert ist;
    Bestimmen, dass die Leistung der APU (100) in einer abnehmenden Phase ist, wenn der PDI größer als der zweite vorbestimmte Wert ist; und

Bestimmen, dass die Leistung der APU (100) einer Fehlerphase entspricht, wenn der PDI größer als ein dritter vorbestimmter Wert ist.

**10.** Verfahren nach Anspruch 9, wobei der erst vorbestimmte Wert 0,7, der zweite vorbestimmte Wertziffer 0,8 und der dritte vorbestimmte Wert 0,85 ist.

**11.** Verfahren nach Anspruch 1, wobei die $PT_{cor}$ entsprechend der folgenden Formel berechnet wird:

$$PT_{cor} = \frac{PT}{\delta} + \Delta PT,$$

wobei $\Delta PT$ eine mit einer Temperatur in Beziehung stehende Funktion ist, $\delta$ ein Höhendruckkorrekturfaktor ist, der entsprechend der folgenden Formel berechnet wird:

$$\delta = e^{\frac{\frac{ALT \times 0.3048}{1000}}{\frac{R(TAT+273.15)}{mg}}},$$

wobei ALT eine Höhe oder eine Standardhöhe ist, TAT eine Umgebungstemperatur oder Gesamttemperatur ist, m eine Luftqualität ist und 29 beträgt, g = 10m/s$^2$ ist und R ein Justierparameter ist.

**12.** Verfahren nach Anspruch 11, wobei die $EGT_{cor}$ entsprechend der folgenden Formel berechnet wird:

$$EGT_{cor} = EGT + \Delta EGT + p1\frac{PT}{\delta} + p2(PT_{cor} - PT_{Req}),$$

wobei $\Delta EGT$ eine mit einer Temperatur in Beziehung stehende Funktion ist, $PT_{Req}$ ein kleinster Nennluftdruck ist, der erforderlich ist, wenn ein Motor anläuft, und p1 und p2 Korrekturkoeffizienten sind.

**13.** Verfahren nach Anspruch 1, wobei der Schritt des Erhaltens umfasst:

Erhalten der EGT, LCIT, STA, TSR und PT aus einer APU-Nachricht.

**14.** Verfahren nach Anspruch 13, wobei die APU-Nachricht eine A13-Nachricht von Airbus oder eine APU-Nachricht von Boeing umfasst.

**15.** Verfahren nach Anspruch 13, das ferner umfasst:

Erzeugen der APU-Nachricht, die die EGT, LCIT, STA, TSR und PT einer Betriebsinformation der APU (100) enthält.

**16.** Verfahren nach Anspruch 13, das ferner umfasst:

Übertragen der APU-Nachricht an einen Server unter Verwendung von ACARS oder ATN.

**Revendications**

**1.** Procédé de détection des performances d'une APU (100), comprenant :

l'obtention de la température des gaz d'échappement, EGT, de la température d'entrée du compresseur, LCIT, de l'heure de démarrage, STA, du temps de service, TSR et de la pression de prélèvement PT ;

la comparaison, respectivement, de STA, TSR, PT et de la différence entre EGT et LCIT (c'est-à-dire, EGT-LCIT) avec leurs valeurs de seuil respectives ;

l'assignation de poids respectifs aux résultats de comparaison entre STA, TSR, PT et EGT-LCIT et leurs valeurs de seuil respectives ; et

la détermination des performances de l'APU (100) en se basant sur les résultats de comparaison pondérés entre STA, TSR, PT et EGT-LCIT et leurs valeurs de seuil respectives, dans lequel l'étape de détermination comprend la détermination des performances de l'APU (100) en se basant sur la formule suivante :

$$PDI = R1 \frac{EGT_{cor}}{EGT_{RedLine}} + R2 \frac{STA}{STA_{WarningLine}} + R3 \frac{TSR}{TSR_{rt}} + R4 \frac{PT_{Min}}{PT_{cor}}$$

où PDI est un indice de détection de performances représentant les performances de l'APU (100), R1, R2, R3 et R4 sont les poids respectifs d'EGT-LCIT, STA, TSR et PT, $EGT_{cor}$ est l'EGT dans les conditions normales, $PT_{cor}$ est la pression d'air de prélèvement dans les conditions normales, et $PT_{min}$ peut être remplacée par $PT_{BaseLine}$.

2. Procédé selon la revendication 1, dans lequel la valeur de seuil d'EGT-LCIT est une valeur de régime critique d'EGT, $EGT_{Redline}$, de l'APU (100).

3. Procédé selon la revendication 1, dans lequel la valeur de seuil de STA est une valeur de diminution de performances $STA_{WarningLine}$ de STA.

4. Procédé selon la revendication 1, dans lequel la valeur de seuil de TSR est le temps de correspondance, $TSR_{rt}$, où la fiabilité de longévité sous l'aile de l'APU (100) est de 70 %.

5. Procédé selon la revendication 1, dans lequel $TSR_{rt}$ est calculée en se basant sur des données réelles par une distribution de Poisson.

6. Procédé selon la revendication 1, dans lequel la valeur de seuil de la PT est une pression d'air de prélèvement minimale $PT_{Min}$ de l'APU (100) ou est la quantité d'air de prélèvement inhérente la plus faible $PT_{BaseLine}$ de l'APU (100) en fonctionnement normal.

7. Procédé selon la revendication 1, dans lequel l'étape de comparaison comprend :

le calcul des rapports entre EGT-LCIT, STA, TSR, PT et leurs valeurs de seuil respectives.

8. Procédé selon la revendication 1, dans lequel le poids du TSR est le plus grand et le poids de la PT est le plus faible.

9. Procédé selon la revendication 1, comprenant en outre :

la détermination des performances de l'APU (100) est bonne lorsque le PDI est inférieur à une première valeur prédéterminée ;

la détermination des performances de l'APU (100) est normale lorsque le PDI est supérieur à la première valeur prédéterminée mais inférieur à une deuxième valeur prédéterminée ;

la détermination des performances de l'APU (100) est dans une période de diminution lorsque le PDI est supérieur à la deuxième valeur prédéterminée ; et

la détermination des performances de l'APU (100) est dans une période de défaut lorsque le PDI est supérieur à une troisième valeur prédéterminée.

10. Procédé selon la revendication 9, dans lequel la première valeur prédéterminée est égale à 0,7, la deuxième valeur prédéterminée est égale à 0,8 et la troisième valeur prédéterminée est égale à 0,85.

11. Procédé selon la revendication 1, dans lequel la $PT_{cor}$ est calculée conformément à la formule suivante :

$$PT_{cor} = \frac{PT}{\delta} + \Delta PT$$

dans laquelle $\Delta PT$ est une fonction associée à une température, $\delta$ est un facteur de correction de pression d'altitude et est calculé conformément à la formule suivante :

$$\delta = e^{\frac{\frac{ALT \times 0{,}3048}{1000}}{\frac{R(TAT+273{,}15)}{mg}}}$$

dans laquelle ALT est une altitude ou une altitude standard, TAT est la température ambiante ou la température totale, m est la qualité de l'air et est égale à 29, g = 10 m/s$^2$ et R est un paramètre de réglage.

12. Procédé selon la revendication 11, dans lequel l'EGT$_{cor}$ est calculée conformément à la formule suivante :

$$EGT_{cor} = EGT + \Delta EGT + p1\frac{PT}{\delta} + p2\left(PT_{cor} - PT_{Req}\right)$$

dans laquelle $\Delta EGT$ est une fonction associée à une température, PT$_{Req}$ est la pression d'air de prélèvement la plus faible nécessaire lorsqu'un moteur démarre et p1 et p2 sont des coefficients de correction.

13. Procédé selon la revendication 1, dans lequel l'étape d'obtention comprend :

   l'obtention de l'EGT, LCIT, STA, TSR et PT d'après un message d'APU.

14. Procédé selon la revendication 13, dans lequel le message d'APU comporte un message A13 d'Airbus ou un message d'APU de Boeing.

15. Procédé selon la revendication 13, comprenant en outre :

   la génération du message d'APU incluant l'EGT, LCIT, STA, TSR et PT d'informations de fonctionnement de l'APU (100).

16. Procédé selon la revendication 13, comprenant en outre :

   la transmission du message d'APU à un serveur utilisant ACARS ou ATN.

Fig.1

Fig.2

Fig.3

Fig.4

APU MES/IDLE REPORT <13>

| | A/C ID | DATE UTC | | FROM | TO | FLT | |
|---|---|---|---|---|---|---|---|
| | Aircraft ID | UTC Time | | | | Flight | |
| CC | BXXXX | yyyy-dd-mm xx:xx:xx | | - | - | - | |
| | PH | CNT | CODE | BLEED STATUS | | APU | |
| | Phase | Count | Trigger Code | | | APU Bleed valve | |
| C1 | 11 | 76401 | 4000 | 16 0000 1 00000 19 | | 1 | |

| | TAT | ALT | CAS | MN | GW | CG | DMU |
|---|---|---|---|---|---|---|---|
| | Total Temperature | Altitude | Calculated Speed | Mach Number | Gross Weight | Center of Gravity | Version |
| CE | 23.3 | 150 | - | - | 65600 | 29.2 | 171CA2 |

| | ASN | AHRS | ACYC | PHAD |
|---|---|---|---|---|
| | APU Serial Number | APU Hours | APU Cycles | APU Physical Adjustment |
| E1 | 2056 | 18477 | 16894 | 4000 |

| | ESN | ACW1 | ACW2 | NA | EGTA | IGV |
|---|---|---|---|---|---|---|
| | Engine Serial Number | APU Control Word 1 | APU Control Word 2 | Rotation Speed | Exhaust Gas Temperature of APU | IGVPosition |
| N1 | 011909 | 00000 | 0A000 | 99.7 | 588 | -5 |
| N2 | 011473 | 00000 | 0A000 | 99.8 | 580 | -5 |
| N3 | 000000 | 00000 | 04000 | 99.8 | 388 | 82 |

| | P2A | LCIT | WB | PT | LCDT | OTA | GLA |
|---|---|---|---|---|---|---|---|
| | Inlet Pressure | Load Compressor Inlet Temperature | Flow Rate of Bleed Air | Pressure of Bleed Air | Load Compressor Inlet Temperature | Oil Temperature of APU | Generator Load of APU |
| S1 | .956 | 33 | .41 | 3.99 | XXXX | 110 | 38 |
| S2 | .952 | 32 | .41 | 3.99 | XXXX | 110 | 27 |
| S3 | .96 | 32 | 0 | 1.17 | XXXX | 107 | 0 |

PREVIOUS APU START

| | STA | EGIP | NPA | OTA | ICIT |
|---|---|---|---|---|---|
| | Starting Time of APU | EGT Peak Value | Peak Value EGT Rotation Speed | Oil Temperature of APU | Load Compressor Inlet Temperature |
| V1 | 49 | 808 | 35 | 110 | 32 |

Fig.5

6000

Obtaining Exhaust Gas Temperature EGT, Compressor Inlet Temperature LCIT, Starting Time STA、 Service Time TSR, and Bleed Air Pressure PT — 6100

Comparing respectively EGT-LCIT, STA, TSR and PT with their respective threshold values — 6200

Assigning weights to comparison results between EGT-LCIT, STA, TSR and PT and their respective threshold values — 6300

Integrating weighted comparison results between EGT-LCIT, STA, TSR and PT and their respective threshold value — 6400

6520

Performance of APU is well

No ← exceed the first predetermined value — 6510

Yes

6620

Performance of APU is normal

No ← exceed the second predetermined value — 6610

Yes

6720

Performance of APU is in the decline period

No ← exceed the third predetermined value — 6710

Yes

Performance of APU is in the failure period — 6800

Fig.6

700

┌─────────────────────────────────────┐
│ Obtaining one or more of Exhaust Gas │── 710
│ Temperature EGT, Starting Time STA,  │
│ Bleed Air Pressure PT, and IGV angle │
└─────────────────────────────────────┘
                    │
                    ▼
┌─────────────────────────────────────┐
│ Determining whether one or more of   │── 720
│ EGT, IGV angle, STA and PT change    │
│ significantly                        │
└─────────────────────────────────────┘
                    │
                    ▼
┌─────────────────────────────────────┐
│ Determining whether the performance of│── 730
│ the APU deteriorates through considering│
│ whether one or more of EGT, STA, PT and│
│ IGV change significantly             │
└─────────────────────────────────────┘

Fig.7

800

┌─────────────────────────────────────┐
│ Obtaining one or two of EGT and PT of│── 810
│ the operation information of the APU │
└─────────────────────────────────────┘
                    │
                    ▼
┌─────────────────────────────────────┐
│ Comparing one or two of the EGT and  │── 820
│ PT with their respective extreme values│
└─────────────────────────────────────┘
                    │
                    ▼
┌─────────────────────────────────────┐
│ Any one of EGT and PT deteriorates if that│── 830
│ one is close to its extreme value    │
└─────────────────────────────────────┘

Fig.8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005261820 A1
- US 4215412 A
- EP 1204076 A2